# EUROPÄISCHE PATENTSCHRIFT

(11) **EP 2 842 193 B1**
(45) Veröffentlichungstag und Bekanntmachung des Hinweises auf die Patenterteilung: **30.12.2020**
(21) Anmeldenummer: 13718333.1
(22) Anmeldetag: 24.04.2013
(51) Int. Cl.: H01M 10/052, H01M 10/0567, H01M 10/0569, H01M 4/38, H01M 4/40, H01M 10/42, H01M 10/0565, H01M 4/505, H01M 4/58, H01M 4/587

(54) **Überladeschutz in 1,5-3 V Lithiumbatterien**
Overcharge protection for 1.3-3 V lithium batteries
PROTECTION CONTRE LA SURCHARGE POUR BATTERIES AU LITHIUM 1,5-3V

(30) Priorität: 26.04.2012 DE 102012008178
(43) Veröffentlichungstag der Anmeldung: 04.03.2015
(73) Patentinhaber: Albemarle Germany GmbH, 65926 Frankfurt am Main (DE)
(72) Erfinder: WIETELMANN, Ulrich, 61381 Friedrichsdorf (DE); EMMEL, Ute, 65929 Frankfurt am Main (DE); TSCHERNYCH, Irina, 76316 Malsch (DE); KAYMAKSIZ, Serife, 89073 Ulm (DE); WACHTLER, Mario, 89077 Ulm (DE); WILHELM, Florian, 89077 Ulm (DE); WOHLFAHRT-MEHRENS, Margret, 89257 Illertissen-Tiefenbach (DE)
(74) Vertreter: Uexküll & Stolberg
(86) Internationale Anmeldenummer: PCT/EP2013/058473
(87) Internationale Veröffentlichungsnummer: WO 2013/160342

(56) Entgegenhaltungen:
- WO-A2-00/36683

## Beschreibung

Lithiumionenbatterien ("LiB's") sind z.Zt. die Batteriesysteme mit der höchsten spezifischen Energiedichte. Sie bestehen aus einer Kombination zweier Lithiuminsertionsmaterialien, die Lithiumionen bei unterschiedlichen Potentiallagen reversibel ein- und auslagern können. Im Allgemeinen besteht die Kathode (die positive Masse) aus einem Lithiummetalloxid, während die Anode (die negative Aktivmasse) ein graphitisches Material enthält. Die Anodenreaktion ist dann wie folgt:

Li⁺ + e⁻ + 6 C ⇔ LiC₆

Die theoretische Kapazität graphitischer Materialien ist durch die Grenzstöchiometrie LiC₆ gegeben und sie beträgt 372 mAh/g.

Es sind auch Anodenmaterialien mit höherer Kapazität bekannt, allen voran Lithiummetall selbst, das eine theoretische spezifische Kapazität von 3.860 mAh/g aufweist. Es ist aber nicht möglich, Lithiummetallanoden in Kombinationen mit "klassischen" Lithiumionenkathodenmaterialien (also Lithiummetalloxiden) zu verwenden, da in diesem Falle beide Elektroden bereits im lithiierten Zustand vorliegen. Sollen also lithiierte Anodenmaterialien, insbesondere Lithiummetall selbst, zum Einsatz kommen, so müssen nichtlithiierte (oder teillithiierte) Kathodenmaterialien verwendet werden. Solche Materialien sind beispielsweise:

| Nichtlithiierte Kathodenmaterialien | Oxidationspotential vs. Li/Li⁺ (V) |
|---|---|
| CFₓ | 3,2 |
| Übergangsmetalloxide, z.B.: | 1,5 - 3,4 |
| - MnO₂ | 3 |
| - V₂O₅ | 1,9 - 3,4 |
| - V₆O₁₃ | 2-2,8 |
| -CuO | 1,5 |
| Übergangsmetallsulfide, z.B.: | 1-2,1 |
| - FeS₂ | 1,5 |
| - MoS₂ | 1 - 2 |
| - TiS₂ | 2,1 |
| F-haltige Konversionskathodenmaterialien, z.B.: BiF₃, Bi₂O₃₋ₓF₂ₓ, FeOF, FeF₃, FeF₂, CoF₃, CoF₂, TiF₃, VF₃, MnF₃, NiF₂, CrF₃, CuF₂ | 2-3,5 |
| Organische Kathodenmaterialien, z.B. Tetraketopiperazine, Polyanthrachinonsulfide, Pyromell itsäureanhydrid | 2-2,5 |
| S | 2,0-2,4 |
| Se | 2,1 |

Die WO 00/36683 A2 beschreibt z. B. nichtwäßrige Elektrolyte für ein Schwefel enthaltendes Kathodenmaterial, mit LiSCN als Leitsalz im Elektrolyten. Beim Uberladen solcher Materialien ist es möglich, dass irreversible Strukturveränderungen auftreten, die die Funktionsfähigkeit des Kathodenmaterials beeinträchtigen oder völlig zerstören können. Im Allgemeinen sollte das Li-Einlagerungspotential nicht um mehr als ca. 0,5 - 1,5 V überschritten werden. Weiterhin ist die Verhinderung eines Überschreitens des Ladepotentials wichtig, da sonst Elektrolytkomponenten, z.B. organische Lösungsmittel, unter Energiefreisetzung oxidiert werden können. Die in Lithiumionenbatterien gebräuchlichen Carbonate sind zwar bis ca. 4,4 V *vs.* Li/Li⁺ stabil, sie sind jedoch für galvanische Zellen mit Lithiummetall- oder Lithiumlegierungsanoden wenig geeignet. Um Metallanoden einsetzen zu können, werden reduktionsstabile Lösemittel, im allgemeinen Ether benötigt. Solche Lösemittel sind jedoch nur bis etwa 3,6 V (Dimethoxyethan, Diethylether) stabil (K. Xu, Electrolytes: Overview in Encyclopedia of Electrochemical Power Sources, J. Garche (ed.), Vol. 5, p. 51, Elsevier Amsterdam 2009).

Eine solche Beschränkung des Ladepotentials kann elektronisch über ein Batteriemanagementsystem erfolgen. Letzteres ist relativ aufwändig und bei einer Funktionsstörung kann es zu gefährlichen Störungen kommen.

Es ist deshalb ein inhärentes (chemisches) Schutzsystem erwünscht, das das Überschreiten des gewünschten Ladeendpotentials verhindert. Ein solches System wird durch sogenannte Redox-Shuttle - Verbindungen geliefert. Derartige Verbindungen werden bei Überschreiten eines bestimmten Ladepotentials oxidiert. Die oxidierte Form ist stabil und kann durch Migration oder Diffusion zur Anode wandern und dort zur Ausgangsform entladen (reduziert) werden. Die reduzierte Spezies kann dann an der Anode wiederum oxidiert werden usw..

Für die o.g. Kathodenmaterialien sind bisher keine reversiblen Redox-shuttle-Verbindungen beschrieben worden.

Die Erfindung hat sich die Aufgabe gestellt, eine wiederaufladbare, nichtwässrige Lithiumbatterie anzugeben, die eine reversible Redox-shuttle-Verbindung enthält und die ca. 0,5 - 1,5 V oberhalb des Ladepotentials lithiumfreier Kathodenmaterialien und unterhalb des Zersetzungsbeginns etherischer Lösungsmittel (ca. 3,6 V) reversibel oxidiert wird.

Erfindungsgemäß wird die Aufgabe gelöst durch die Verwendung von Lithiumrhodanid (LiSCN) als Elektrolytkomponente in einer wiederaufladbaren, nichtwäßrigen Lithiumbatterie, die als aktives Anodenmaterial im geladenen Zustand entweder Lithiummetall oder eine Lithiumlegierung, ein aktives Kathodenmaterial mit einem Redoxpotential im Bereich zwischen 1,5 und 3,4 V *vs.* Li/Li⁺ enthält. Vorzugsweise ist als aktives Anodenmaterial pulverförmiges Lithiummetall oder eine pulverförmige Lithiumlegierung enthalten. Diese aus pulverförmigen Partikeln hergestellten Anoden können durch Verpressen, Walzen oder dergleichen mechanisch kompaktiert vorliegen oder durch Sintern verdichtet werden, so dass eine makroskopisch blechähnliche Struktur erhalten wird. Die kompaktierte Pulveranode ist aber durch eine Kompositstruktur gekennzeichnet, d.h. die Phasengrenzen der pulverförmigen Primärpartikel sind durch hochauflösende bildgebende Verfahren (beispielsweise Rasterelektronenmikroskopie) erkennbar. Die Verwendung pulverförmiger oder von Pulvern abgeleiteter Anodenschichten hat den Vorteil, dass die spezifische (d.h. oberflächenbezogene) Strombelastung im Vergleich zur homogenen Blechanode verringert wird, so dass ein verringertes Dendritenwachstum resultiert (siehe beispielsweise: S.W.Kim, Metals and Materials, 6 (2000), 345-349).

Als Lithiumlegierung werden binäre Lithium-Zweitmetall-Verbindungen verwendet, wobei das Zweitmetall bevorzugt aus gewählt ist aus der Gruppe Si, Sn, Al, Sb.

Das Kathodenmaterial ist ausgewählt aus der Gruppe bestehend aus: CFₓ, Übergangangsmetalloxide, Übergangsmetallsulfide, Übergangsmetallfluoride, Übergangsmetalloxyfluoride, organische redoxaktive Verbindungen sowie Schwefel und/oder Selen.

Vorzugsweise ist das Kathodenmaterial ausgewählt aus CFₓ, MnO₂, V₂O₅, V₆O₁₃, FeOF, FeF₃, FeF₂, S.

In der wiederaufladbaren, nichtwäßrigen Lithiumbatterie liegt der Elektrolyt bei Raumtemperatur in flüssigem, gelartigem oder festem Zustand vor.
Die wiederaufladbare, nichtwäßrige Lithiumbatterie enthält als Elektrolyt vorzugsweise ein organisches, aprotisches Lösungsmittel ausgewählt aus der Gruppe bestehend aus: acyclischen oder cyclischen Ethern, Polyethern, Nitrilen, Lactonen, Kohlensäureestern und/oder ionischen Flüssigkeiten.

Vorzugsweise enthält der Elektrolyt mindestens ein organisches, aprotisches Lösungsmittel ausgewählt aus der Gruppe bestehend aus: Tetrahydropyran, Tetrahydrofuran, 1,2-Dimethoxyethan, Diethylenglykoldimethylether, Acetonitril, Adiponitril, Malodinitril, Glutaronitril, γ-Butyrolacton und Imidazoliumsalze. Vorzugsweise kann der Elektrolyt der wiederaufladbaren, nichtwäßrigen Lithiumbatterie LiSCN und mindestens ein weiteres Leitsalz enthalten.

Das weitere Leitsalz ist vorzugsweise ausgewählt aus der Gruppe bestehend aus: LiPF₆, Lithiumfluoroalkylphosphaten, LiBF₄, Imidsalzen, LiOSO₂CF₃, Methidsalzen, LiClO₄, Lithiumchelatoboraten, Lithiumfluorochelatoborate, Lithiumchelatophosphaten, Lithiumfluorochelatophosphaten und /oder Lithiumhalogeniden.

Der Elektrolyt der wiederaufladbaren, nichtwäßrigen Lithiumbatterie kann organische Polymere ausgewählt aus der Gruppe bestehend aus: Polyethylenoxid, Polyacrylnitril, Polyvinylidenfluorid oder beliebige Mischungen daraus enthalten.

In der wiederaufladbaren, nichtwäßrigen Lithiumbatterie liegt das LiSCN im Elektrolyten in einer Konzentration von 0,01 bis 15 Gew.-% vor.

Vorzugsweise liegt das LiSCN im Elektrolyten in einer Konzentration von 1 bis 10 Gew.-% vor.

Die Erfindung betrifft auch einen Elektrolyten zur Verwendung in wiederaufladbaren, nichtwäßrigen Lithiumbatterien, bei der Lithiumrhodanid als Elektrolytkomponente enthalten ist.

Vorzugsweise ist das LiSCN im Elektrolyten in einer Konzentration von 0,01 bis 15 Gew.-% enthalten.

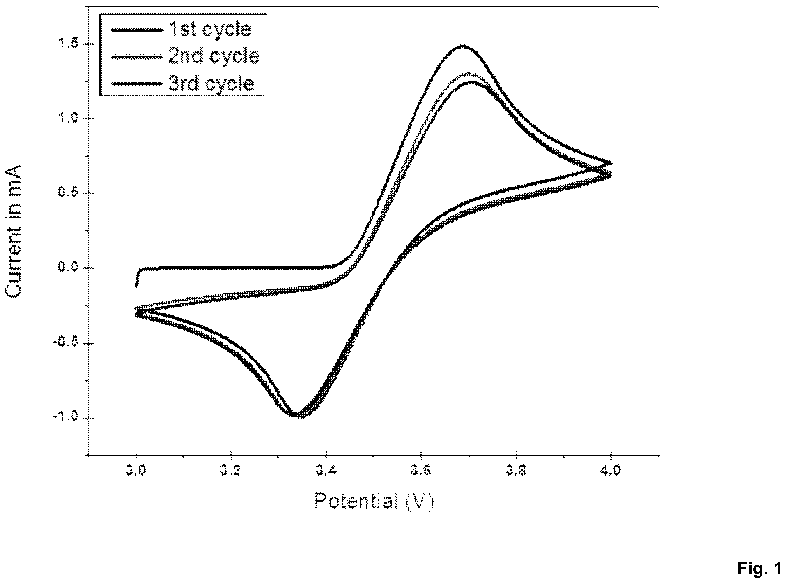

Es wurde gefunden, dass LiSCN bei Überschreiten eines Potentials von ca. 3,4 V vs. Li/Li⁺ oxidiert und im anschließenden reduktiven Ast reduziert wird.Diese Reaktion ist überraschenderweise reversibel: in Fig.1 werden drei Zyklen gezeigt, die dies veranschaulichen. Der besondere Vorteil von LiSCN liegt darin, dass es selbst ein stark dissoziierendes Lithiumsalz ist und deshalb selbst als Li-Elektrolyt verwendet werden kann. Es ist deshalb prinzipiell nicht notwendig, neben LiSCN ein weiteres Lithiumsalz mit Leitsalzfunktion zu verwenden.
Der Elektrolyt kann in flüssiger, gelartiger oder fester Form vorliegen. Er kann neben Lithiumrhodanid organische, aprotische Lösungsmittel z.B. Kohlensäureester (Dimethylcarbonat, Diethylcarbonat, Ethylmethylcarbonat, Propylencarbonat, Ethylencarbonat), acyclische oder cyclische Ether (Dibutylether, Tetrahydropyran oder Tetrahydrofuran), Polyether (1,2-Dimethoxyethan oder Diethylenglykoldimethylether), ferner Nitrile (Acetonitril, Adiponitril, Malodinitril, Glutaronitril) sowie Lactone (γ-Butyrolacton), ionische Flüssigkeiten (z.B. Imidazoliumsalze), weitere Lithiumsalze (z.B. LiPF₆, Lithiumfluoroalkylphosphate, LiBF₄, Imidsalze (z.B. LiN(SO₂CF₃)₂), LiOSO₂CF₃, Methidsalze (z.B. LiC(SO₂CF₃)₃), LiClO₄, Lithiumchelatoborate (z.B. LiBOB), Lithiumfluorochelatoborate (z.B. LiC₂O₄BF₂), Lithiumchelatophosphate (z.B. LiTOP) und Lithiumfluorochelatophosphate (z.B. Li(C₂O₄)₂PF₂), Lithiumhalogenide (LiCI, LiBr, Lil), Additive (z.B. Vinylencarbonat), und/oder polare Polymere (z.B. Polyethylenoxid, Polyacrylnitril, Polyvinylidenfluorid) in beliebiger Mischung enthalten.

Das LiSCN liegt im Elektrolyten in einer Konzentration von 0,01 bis 15 %, besonders bevorzugt von 1 bis 10 % vor.

Figur 1 zeigt ein Zyklovoltagramm eines Elektrolyten mit 0,1 M LiSCN in 1 M LiPF₆ / EC:DMC (1:1 wt.) und Pt-Electrode aufgenommen mit einer Vorschubgeschwindigkeit: 100 mV/s im Scanbereich: 3.0-4.0 V vs. Li/Li⁺.

## Patentansprüche

1. Verwendung von LiSCN als Redox-Shuttle - Verbindung in Elektrolyten von wiederaufladbaren, nichtwäßrigen Lithiumbatterien, wobei diese als aktives Anodenmaterial entweder Lithiummetall oder eine Lithiumlegierung, ein aktives Kathodenmaterial mit einem Redoxpotential im Bereich zwischen 1,5 und 3,4 V *vs.* Li/Li⁺ und Lithiumrhodanid (LiSCN) als Elektrolytkomponente und mindestens ein weiteres Leitsalz enthalten, wobei das LiSCN im Elektrolyten in einer Konzentration von 0,01 bis 15 Gew.-% vorliegt.

2. Verwendung nach Anspruch 1, **dadurch gekennzeichnet, dass** als aktives Anodenmaterial pulverförmiges Lithiummetall oder eine pulverförmige Lithiumlegierung enthalten ist, die in kompaktierter Form vorliegen können.

3. Verwendung nach Anspruch 1 oder 2, **dadurch gekennzeichnet, dass** das Kathodenmaterial ausgewählt ist aus der Gruppe bestehend aus: CFₓ, Übergangangsmetalloxide, Übergangsmetallsulfide, Übergangsmetallfluoride, Übergangsmetalloxyfluoride, organische redoxaktive Verbindungen sowie Schwefel und/oder Selen.

4. Verwendung nach Anspruch 3, **dadurch gekennzeichnet, dass** das Kathodenmaterial ausgewählt aus CFₓ, MnO₂, V₂O₅, V₆O₁₃, FeOF, FeF₃, FeF₂, S.

5. Verwendung nach einem oder mehreren der Ansprüche 1 bis 4, **dadurch gekennzeichnet, dass** der Elektrolyt bei Raumtemperatur in flüssigem, gelartigem oder festem Zustand vorliegt.

6. Verwendung nach Anspruch 5, **dadurch gekennzeichnet, dass** der Elektrolyt organische, aprotische Lösungsmittel ausgewählt aus der Gruppe bestehend aus: acyclischen oder cyclischen Ethern, Polyethern, Nitrilen, Lactonen, Kohlensäureestern und/oder ionischen Flüssigkeiten enthält.

7. Verwendung nach Anspruch 6, **dadurch gekennzeichnet, dass** der Elektrolyt mindestens ein organisches, aprotisches Lösungsmittel ausgewählt aus der Gruppe bestehend aus: Tetrahydropyran, Tetrahydrofuran, 1,2-Dimethoxyethan, Diethylenglykoldimethylether, Acetonitril, Adiponitril, Malodinitril, Glutaronitril, γ-Butyrolacton und Imidazoliumsalze enthält.

8. Verwendung nach einem oder mehreren der Ansprüche 1 bis 7, **dadurch gekennzeichnet, dass** das weitere Leitsalz ausgewählt ist aus der Gruppe bestehend aus: LiPF₆, Lithiumfluoroalkylphosphaten, LiBF₄, Imidsalzen, LiOSO₂CF₃, Methidsalzen, LiClO₄, Lithiumchelatoboraten, Lithiumfluorochelatoborate, Lithiumchelatophosphaten, Lithiumfluorochelatophosphaten und /oder Lithiumhalogeniden.

9. Verwendung nach einem oder mehreren der Ansprüche 1 bis 8, **dadurch gekennzeichnet, dass** der Elektrolyt organische Polymere ausgewählt aus der Gruppe bestehend aus: Polyethylenoxid, Polyacrylnitril, Polyvinylidenfluorid oder beliebige Mischungen daraus, enthält.

10. Verwendung nach Anspruch 1, **dadurch gekennzeichnet, dass** das LiSCN im Elektrolyten in einer Konzentration von 1 bis 10 Gew.-% vorliegt.

## Claims

1. Use of LiSCN as a redox shuttle-compound in electrolytes of rechargeable, non-aqueous lithium batteries, which contain as the active anode material either lithium metal or a lithium alloy, an active cathode material with a redox potential in the range between 1.5 and 3.4 V vs. Li/Li⁺, and lithium rhodanide (LiSCN) as an electrolyte component, and at least one other conductive salt, wherein the LiSCN is present in the electrolyte in a concentration of 0.01 to 15% by weight.

2. Use according to claim 1, **characterized in that** as the active anode material powdery lithium metal or a powdery lithium alloy is contained, which can be present in compacted form.

3. Use according to claim 1 or 2, **characterized in that** the cathode material is selected from the group consisting of: CFₓ, transition metal oxides, transition metal sulfides, transition metal fluorides, transition metal oxyfluorides, organic redox-active compounds and sulfur and/or selenium.

4. Use according to claim 3, **characterized in that** the cathode material is selected from CFₓ, MnO₂, V₂O₅, V₆O₁₃, FeOF, FeF₃, FeF₂, S.

5. Use according to one or more of claims 1 to 4, **characterized in that** the electrolyte at room temperature is in a liquid, gel-like or solid state.

6. Use according to claim 5, **characterized in that** the electrolyte contains organic, aprotic solvents selected from the group consisting of: acyclic or cyclic ethers, polyethers, nitriles, lactones, carbonic acid esters and/or ionic liquids.

7. Use according to claim 6, **characterized in that** the electrolyte contains at least one organic, aprotic solvent selected from the group consisting of: tetrahydropyran, tetrahydrofuran, 1,2-dimethoxyethane, diethylene glycol dimethyl ether, acetonitrile, adiponitrile, malodinitrile, glutaronitrile, γ-butyralactone and imidazolium salts.

8. Use according to one or more of claims 1 to 7, **characterized in that** the other conductive salt is selected from the group consisting of: LiPF₆, lithium fluoroalkyl phosphates, LiBF₄, imide salts, LiOSO₂CF₃, methide salts, LiClO4, lithium chelatoborates, lithium fluorochelatoborate, lithium chelatophosphates, lithium fluorochelatophosphates and/or lithium halides.

9. Use according to one or more of claims 1 to 8, **characterized in that** the electrolyte contains organic polymers selected from the group consisting of: polyethylene oxide, polyacrylonitrile, polyvinylidene fluoride or any mixtures thereof.

10. Use according to claim 1, **characterized in that** the LiSCN is present in the electrolyte in a concentration of 1 to 10% by weight.

## Revendications

1. Utilisation de LiSCN en tant que composé navette redox dans des électrolytes de batteries au lithium non aqueuses rechargeables, celles-ci contenant, en tant que matériau d'anode actif, soit du lithium métal soit un alliage à base de lithium, un matériau de cathode actif avec un potentiel redox situé dans la plage comprise entre 1,5 et 3,4 V vs. Li/Li⁺ et du thiocyanate de lithium (LiSCN) en tant que composant d'électrolyte, et au moins un autre sel conducteur, le LiSCN étant présent dans l'électrolyte en une concentration allant de 0,01 à 15 % en poids.

2. Utilisation selon la revendication 1, **caractérisée en ce que** le matériau d'anode actif contenu est du lithium métal pulvérulent ou un alliage pulvérulent à base de lithium, qui peuvent être présents sous une forme comprimée.

3. Utilisation selon la revendication 1 ou 2, **caractérisée en ce que** le matériau de cathode est choisi dans le groupe comprenant : CFₓ, des oxydes de métaux de transition, des sulfures de métaux de transition, des fluorures de métaux de transition, des oxyfluorures de métaux de transition, des composés organiques redox actifs ainsi que du soufre et/ou du sélénium.

4. Utilisation selon la revendication 3, **caractérisée en ce que** le matériau de cathode est choisi parmi CFₓ, MnO₂, V₂O₅, V₆O₁₃, FeOF, FeF₃, FeF₂, S.

5. Utilisation selon une ou plusieurs des revendications 1 à 4, **caractérisée en ce qu'**à température ambiante, l'électrolyte est présent à l'état liquide, à l'état de gel ou à l'état solide,

6. Utilisation selon la revendication 5, **caractérisée en ce que** l'électrolyte contient des solvants organiques aprotiques choisis dans le groupe comprenant : des éthers acycliques ou cycliques, des polyéthers, des nitriles, des lactones, des esters de l'acide carbonique et/ou des liquides ioniques.

7. Utilisation selon la revendication 6, **caractérisée en ce que** l'électrolyte contient au moins un solvant organique aprotique choisi dans le groupe comprenant : tétrahydropyrane, tétrahydrofurane, 1,2-diméthoxyéthane, diéthylène glycol diméthyl éther, acétonitrile, adiponitrile, malodinitrile, glutaronitrile, γ-butyrolactone, et des sels d'imidazolium.

8. Utilisation selon une ou plusieurs des revendications 1 à 7, **caractérisée en ce que** le sel conducteur supplémentaire est choisi dans le groupe comprenant : LiPF₆, fluoroalkyl phosphates de lithium, LiBF₄, sels imides, LiOSO₂CF₃, sels méthides, LiClO₄, chélates borates de lithium, fluorochélates borates de lithium, chélates phosphates de lithium, fluorochélates phopshates de lithium et/ou halogénures de lithium.

9. Utilisation selon une ou plusieurs des revendications 1 à 8, **caractérisée en ce que** l'électrolyte contient des polymères organiques choisis dans le groupe comprenant : polyéthylène oxyde, polyacrylonitrile, polyfluorure de vinylidène ou n'importe quels mélanges.

10. Utilisation selon la revendication 1, **caractérisée en ce que** LiSCN est présent dans l'électrolyte en une concentration allant de 1 à 10 % en poids.
